# EUROPÄISCHE PATENTSCHRIFT

(11) **EP 2 228 033 B1**
(45) Veröffentlichungstag und Bekanntmachung des Hinweises auf die Patenterteilung: **26.08.2015**
(21) Anmeldenummer: 10001923.1
(22) Anmeldetag: 25.02.2010
(51) Int. Cl.: A61C 19/04, G01B 3/56, G01B 3/04

(54) **Messeinrichtung zur Bestimmung mehrerer Parameter bei der Herstellung von Total-Zahnprothesen**
Measuring device for determining multiple parameters when producing total dental prosthetics
Dispositif de mesure destiné à la détermination de plusieurs paramètres lors de la fabrication de prothèses dentaires totales

(30) Priorität: 13.03.2009 DE 102009012678; 15.07.2009 DE 102009033495
(43) Veröffentlichungstag der Anmeldung: 15.09.2010
(73) Patentinhaber: Heraeus Kulzer GmbH, 63450 Hanau (DE)
(72) Erfinder: Polei, Andreas, 94551 Lalling (DE)
(74) Vertreter: Bendele, Tanja

(56) Entgegenhaltungen:
- DE-C- 320 262
- US-A- 2 614 329
- US-A- 3 474 538

## Beschreibung

Bei der Herstellung von Zahnprothesen erhält der Zahntechniker einen Abdruck der Mundsituation, in der Regel vom zahnlosen oder teilbezahnten Kiefer. Davon wird ein Gipsmodell gegossen. Dieses Meistermodell dient zur Herstellung eines oder mehrerer Arbeitsmodelle. Nach der traditionellen Methode werden die künstlichen Zähne am Arbeitsmodell in Wachs aufgestellt und das Wachs später durch Prothesenbasiskunststoff ersetzt.

Für die Auswahl und Aufstellung der künstlichen Zähne müssen Zahnarzt und Zahntechniker verschiedene Messgrößen vom Patienten und vom Meistermodell abnehmen. Das geschieht zur Zeit mit verschiedenen Hilfsmitteln, die am Arbeitsplatz vorhanden sein sollten. Dazu gehören bzw. sind kommerziell erhältlich:
*I Papillameter zur Ermittlung der Oberlippenlänge*
   *(*Horst Gründler,Die Totalprothese IV. Grundwissen für Zahntechniker, Band 4, Seite 71. Neuer Merkur Verlag: Auflage: 2. 2004, hergestellt z.B. von der Fa. Candulor)
   Das Instrument dient zur Ermittlung von Daten zur Lippenschlusslinie in Verbindung mit der Länge der Oberlippe. Von der Lippenschlusslinie hängt die Länge der Frontzähne ab. Man liest zunächst die Lippenlänge ab und kann dann die Bestimmung der Länge der Frontzähne vornehmen.
**II** Alameter
   (Horst Gründler, Die Totalprothese IV. Grundwissen für Zahntechniker. Band 4, Seite 70, Neuer Merkur Verlag; Auflage: 2. 2004, zur Ermittlung der Zahnform hergestellt z.B. von der Fa. Candulor).
   Der Alameter dient als Hilfsmittel zur Evaluierung der passenden Patienten-Zahnform durch den Zahnarzt. Nach Messen der Nasenbreite berechnet sich die ungefähre Breite der Zahnform, welche zum Gesicht des Patienten passt. Das trägt zu einem harmonischen Bild des Patienten mit seinem Zahnersatz bei.
**III** Durchsichtiges Messraster, meist kreisrunde Scheiben (Bestandteil des diagnostischen Besteck nach Korkhaus) zum Auffinden von Symmetrien und zum Messen.
**IV** Geodreieck zum Auffinden von Symmetrien und zum Messen.
**V** Mehrere Winkelschablonen, nämlich
   - zum Auffinden der Stopplinie = 22,5°,
   - zur Kreuzbissindikation < = 80°(interalveoläre Verbindungslinie, Kieferkammverbindungslinie),
   - als Senkrechte auf die Kauebene = 90°,
   - zusätzlich = 45°,
   - schließlich als Referenz zur Oralneigung der Unterkieferseitenzähne bei Zahnaufstellung der Premiumzähne nach TiF = 4°.
**VI** Flexibles Lineal zum Messen von Strecken, Frontzahnbogenlängen etc. (max. 100mm).
**VII** Schieblehre zum Messen einzähniger Schaltlücken in einem Bereich von 3,2 mm (2/3 der kleinsten Zahnbreite) und 13,0 mm, bei einer Genauigkeit von 1/10mm.
**VIII** Bewährt haben sich in bestimmten Fällen auch dem Fachmann bekannte Bestimmungsvorrichtungen wie Merz Artegral 9° bzw. Integral 6°.

Angesichts dieser Vielfalt hat sich der Erfinder die Aufgabe gestellt, ein einfach zu handhabendes Messinstrument zu entwickeln, mit dem eine ganze Reihe der oben genannten Messungen erfolgen können.

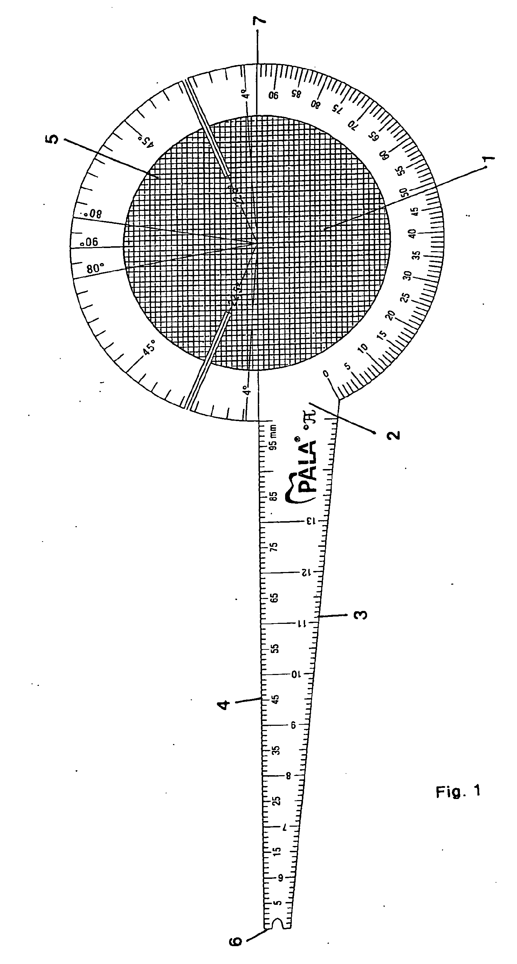

Bekannt sind aus US2614329 und US3474538 (jeweils Fig. 1) Zeichenhilfen für das technische Zeichnen, bei denen in der Mitte eines kreisförmigen Teils ein Stechstift oder ein Loch zum Durchführen einer Bleistiftspitze vorgesehen sind. Die Ausgestaltung eines vom kreisförmigen Teil ausgehenden, sich verjüngenden Linealteils ist dort derart, dass es mit einer Längsseite tangential vom Kreis wegstrebt und mit der anderen Längsseite radial vom Kreismittelpunkt. Insgesamt ergibt das zwangsläufig jeweils ein sich verjüngendes Lineal (jeweils Fig.1). Eine Stechlehrenfunktion des sich verjüngenden Lineals ist allerdings weder in US2614329 noch in US3474538 vorgesehen.

### Die Erfindung

Die Erfindung betrifft eine Messeinrichtung nach Anspruch 1. Bevorzugte Ausgestaltungen sind den weiteren Ansprüchen zu entnehmen.

Die Messeinrichtung ist beispielhaft in Fig. 1 dargestellt. Sie ist aus transparentem flexiblen Material und umfasst:
**A** einen kreisförmig gestalteten Abschnitt 1, dessen Durchmesser im Bereich des Abstandes der Außenflächen der Backenzähne des rechten und linken menschlichen Kiefers liegt. Dieser ist einteilig verbunden mit,
**B** einem sich distal vom kreisförmigen Abschnitt verjüngendem Stechlehrenlineal 2 mit zwei geraden Längsseiten, die jeweils mit einer Skala 4 zur Längenmessung im metrischen und/oder Zollmaß und einer Skala 3 zur Abstandsmessung von Zahnlücken mit Abstandsangaben zwischen den beiden Längsseiten an den entsprechenden Stellen versehen sind, wobei die Fortsetzung einer Längsseite den Kreisteil als sichtbare gerade Linie in zwei Hälften teilt,
**C** deren eine einen halbkreisförmigen Winkelmesser 5 mit den vorgegebenen Winkelmaßen 22,5°, 80° und 90° als radial vom Mittelpunkt zum Umfang des kreisförmigen Teils verlaufende gerade Linien darstellt.

Der Winkelmesser übernimmt die Funktion, die gewöhnlich mit dem oben beschriebenen Geodreieck wahrgenommen wird. Eine horizontale Grundlinie 7 dient zum Einstellen der Tischebene, im Prinzip wie eine Wasserwaage. Diese horizontale Grundlinie ist wichtig für alle Winkelreferenzen an der Messeinrichtung.

Die Stechlehre kann an der Spitze mit einer konkaven Einbuchtung zum Messen von Weichteilen versehen sein.

Die Messeinrichtung eignet sich zur Bestimmung sämtlicher zur Modellanalyse benötigten Strecken und Winkel und kann insbesondere für folgende Messungen und Bestimmungen benutzt werden:

### Ermitteln von Relationen

a) Lückenbreiten
   Die Lückenbreite für Einzelzähne wird mit dem Stechmaß wie bekannt ermittelt.
b) Schaltlücken
   Die biegsame lineare Skala lässt eine metrische Erfassung der Schaltlücke zu.
c) Seitenzahn - Breite (Distanz Eckzahnlinie - Stopplinie)
   Mit der linearen Skala wird die Distanz der Eckzahnlinie zur Stopplinie gemessen, die der Seitenersatzzahnbreite entsprechen soll.
d) Frontzahn - Bogen (biegsame lineare Skala)
e) Zahnlänge (Abstand Wachskante Ästhetikschablone - Lachlinie)
   Der Rand der Ästhetikschablone entspricht dem sichtbaren Anteil der Ersatzfrontzähne bei der entspannten Lippe. Die Lachlinie entspricht dem Entblößen der Frontzähne unter Weichteilfunktion. Somit ergibt die Distanz Ästhetikschablonenoberrand - Lachlinie die Länge der Ersatzzähne, damit beim Lachen möglichst wenig Prothesenkunststoff sichtbar ist.
f) Frontzahn - Breite (Abstand Eckzahn unten)
   Der Abstand der beiden Eckzahnlinien ergibt die Breite der UK Ersatzfrontzähne. Gemessen wird mit dem biegsamen linearen Anteil.
g) Intralveolärer Abstand mit linearer Skala des Stechmaßes an einartikulierten Modellen bei flexibler Ausführung
   Der Abstand der unbezahnten Kiefer zueinander ergibt das Maß der Seitenersatzzahnhöhe. Er lässt die Abschätzung des Einsatzes von Aufstellhilfen wie z.B. dem Filou-28, Fa. Heraeus, Hanau, zu. Gemessen wird auf der Modellrückseite mit dem Raster des runden Anteils des Alveolometers.
h) 80°-Winkel für Messung des interalveolären Winkels an einartikulierten Modellen.
i) 22,5°-Winkel für Messung Stopplinie, die dem Zahntechniker die distale Position angibt, ab
   der er keine Zähne mit Bissschluss mehr setzen darf.
   Der Schnittpunkt der 22,5°-Linie mit dem auf der Modellaußenseite übertragenen Kieferkammverlauf kann durch Einschnitte in der Messhilfe direkt aufgezeichnet werden.
j) Mit der Einbuchtung am distalen Ende des Stechmaßes können Weichteilrelationen ermittelt werden. Hierzu wird die Einbuchtung auf das Lippenband aufgesetzt. Mit der linearen Skala können jetzt das Maß der angewachsenen Gingiva und die Lippenlänge ermittelt werden. Diese Werte sind für die Einschätzung des sichtbaren Prothesenkunststoffanteiles wichtig.
k) Mit dem optionalen Scherenmaß kann die Breite der Nase an den Nasenflügeln direkt am Patienten ermittelt werden. Dieses Maß ist für die Auswahl der Frontersatzzahnbreite notwendig.

Ein derartiges Scherenmaß nach Art eines Messzirkels entsteht durch gelenkige Verbindung zweier Messschenkel im Zentrum des runden Anteils A, das weitere Messmöglichkeiten eröffnet (z.B. vertikale oder transversale Maße) und die Übertragung dieser Maße an andere Messorte erlaubt, sowie dadurch einen direkten Vergleich der Maße (ohne Ablesen einer radialen, metrischen Skala, die auf dem Kreisumfang angebracht sein kann) zulässt.

Die erfindungsgemäße Messeinrichtung kann sowohl im Dentallabor zur Modellanalyse als auch in der Zahnarztpraxis zur Schnellkontrolle und Modellanalyse eingesetzt werden. Es bieten sich insbesondere folgende Anwendungsmöglichkeiten:
Bei der Implantatplanung: Lückenbreitenmessung am Patienten, Lückenhöhenmessung für Inserierung von Implantaten am Patienten. Besonders die Höhe ist für die spätere Versorgung der Implantate mit einer Krone via Insert wichtig, da eine Mindesthöhe nötig ist, die Herstellerabhängig ist.

Bei der Implantatplanung: Visualisierung des Zahnbogens vor einer Schaltlücke durch biegsamen Anteil.

Allgemein: Visualisierung von Gesichtsasymmetrien durch metrische Visualisierung.

## Patentansprüche

1. Messeinrichtung aus transparentem flexiblen Material zur Bestimmung von Parametern für die Herstellung von Zahnersatz mit
einem Kreisabschnitt (1), dessen Durchmesser im Bereich des Abstandes der Außenflächen der Backenzähne des rechten und linken menschlichen Kiefers liegt, der einteilig verbunden ist mit
einem sich distal vom kreisförmigen Abschnitt sich verjüngendem Stechlehrenlineal (2) mit zwei geraden Längsseiten, die jeweils mit einer Skala (3) zur Längenmessung im metrischen und/oder Zollmass und einer Skala (4) zur Abstandsmessung von Zahnlücken mit Abstandsangaben zwischen den beiden Längsseiten an den entsprechenden Stellen versehen sind, wobei die Fortsetzung einer Längsseite den Kreisteil als sichtbare gerade Linie in zwei Hälften teilt,
deren eine einen halbkreisförmigen Winkelmesser (5) mit den vorgegebenen Winkelmassen 22,5°, 80° und 90° als radial vom Mittelpunkt zum Umfang des kreisförmigen Teils verlaufende gerade Linien darstellt.

2. Messeinriohtung nach Anspruch 1, bei der die Spitze (6) des Stechlehrenlineals (2) eine konkave Einbuchtung zum Ansetzen an Weichgewebe aufweist.

3. Messeinrichtung nach Anspruch 1, mit dem zusätzlichen Merkmal, dass durch gelenkige Verbindung zweier Messschenkel im Zentrum des Kreisabschnitts (1) ein Schermass nach Art eines Messzirkels entsteht, das weitere Messmöglichkeiten eröffnet, und das die Übertragung dieser Masse an andere Messorte erlaubt.

## Claims

1. Measuring device of transparent flexible material for the determination of parameters for the production of dental prostheses with
a circular section (1) the diameter of which is in the region of the distance between the outside surfaces of the molars of the right and the left human jaw which is connected to form a single section with
an interproximal gauge rule (2) tapering in a distal manner starting out from the circular section and having two straight longitudinal sides, each being provided with a graduated scale (3) for measuring length on a metric and/or inch graduated scale and a graduated scale (4) for measuring the distance of tooth gaps with distance indications between the two longitudinal sides at corresponding locations, the extension of one longitudinal side dividing the circular part into two halves in the form of a visible straight line,
one of which represents a semi-circular protractor (5) with the given angle measurements of 22.5°, 80° and 90° as straight lines running radially from the centre to the circumference of the circular part.

2. Measuring device according to claim 1 where the tip (6) of the Interproximal gauge rule (2) exhibits a concave recess for placing on soft parts.

3. Measuring device according to claim 1 with the additional feature that by a hinged connection between two measuring shanks in the centre of the circular section (1) a modulus of shearing similar to that of a compass is provided which opens up further measuring possibilities and allows the transfer of these measurements to other measuring sites.

## Revendications

1. Dispositif de mesure en matériau transparent souple pour la détermination de paramètres pour la fabrication de prothèses dentaires avec
une partie d'un circuit (1) dont le diamètre est de l'ordre de la distance entre les surfaces extérieures des molaires de la mâchoire droite et gauche humaine, qui est reliée d'une seule pièce à
une règle conique de perçage (2) qui se resserre de manière distale à partir de la section circulaire avec deux côtés longitudinaux rectilignes, chacun prévu aux endroits appropriés avec une échelle (3) pour la mesure de longueur à la taille métrique et / ou pouce et une échelle (4) pour mesurer la distance d'entredents avec une information de distance entre les deux côtés longitudinaux, avec la poursuite d'un côté long qui divise la partie du cercle comme une ligne droite visible en deux moitiés,
l'une d'entre elles représentant un rapporteur d'angle semi-circulaire (5) avec les cotes d'angle prédéterminées de 22,5 °, 80 ° et 90 ° comme des lignes droites en direction radiale du centre vers la périphérie de la partie circulaire.

2. Dispositif de mesure selon la revendication 1, dans lequel la pointe (6) de la règle co-nique de perçage (2) montre une dentelure concave pour prendre appui sur des tissus mous.

3. Dispositif de mesure selon la revendication 1, avec la caractéristique supplémentaire que,
causée par une liaison articulée des deux branches de mesure au centre d'une partie d'un circuit (1), il en resulte une mesure de cisaillement à la manière d'un compas de mesure, qui ouvre autre possibilités de mesure et qui permet le transfert de ces mesures à d'autres points de mesure.
